# EUROPEAN PATENT SPECIFICATION

(11) **EP 1 956 692 B1**
(45) Date of publication and mention of the grant of the patent: **13.08.2014**
(21) Application number: 08100859.1
(22) Date of filing: 24.01.2008
(51) Int. Cl.: H02B 1/44

(54) **Upright for electrical switchboard**
Pfosten für ein elektrisches Schaltfeld
Montant pour tableau de commutation

(30) Priority: 06.02.2007 IT RM20070056
(43) Date of publication of application: 13.08.2008
(73) Proprietor: BTICINO S.P.A., Viale Borri, 231 21100 Varese (IT)
(72) Inventor: Passera, Costantino, I-20147, MILANO (IT); Maggi, Christian, I-21020, Buguggiate - Varese (IT)
(74) Representative: Carangelo, Pierluigi

(56) References cited:
- EP-A- 0 891 027
- US-B1- 6 467 640

## Description

The present invention relates to the electric boards and, in particular, it relates to an upright for an electric board.

A typical electric board is known to be composed of a box-shaped structure defining an inner space for housing electrical equipment. In general, the box-shaped structure comprises walls, or wall portions, for example, made of sheet or insulating material, which define the board inner space. A side of the box-shaped structure has an opening which allows reaching the inner space.

The opening which allows reaching the inner space is intended to be closed by one or more panels which are removably secured to the board under the standard working conditions of the board. In some cases these panels, beside closing the entrance opening, also have a support function for the electrical equipment to be installed inside the board space. In this case, this type of panels is more properly referred to by the term "equipment-mounting panels".

In order to allow the securing of the panels to the board, the electric boards of the state of the art include two vertical securing uprights integral to the board structure, for example to side walls of the board, and arranged along two opposite sides of the entrance opening.

Each of the uprights includes a securing band that is provided in order to allow the securing of one or more panels to the board. The securing band is typically made in folded metal section bar, and comprises securing means which are implemented, for example, in an array of vertically aligned holes. A possible way to secure a panel to the securing band of an electric board upright is to employ screws, or pins, for example, as described in the Italian patent application No. RM 2005 A 000202. Another mode of securing a panel to an electric board upright provides the use of lock securing means, for example, in accordance with the teachings of the Italian patent application No. RM 2003 A 000207.

An upright as defined in the preamble of claim 1 is already known EP 0 891 027.

Object of the present invention is to provide an electric board upright which, compared to the uprights described above with reference to the prior art, allows simplifying and making particularly easy and quick the assembling operations of the board and/or the successive maintenance operations for the same.

This object is obtained by an upright as defined in the annexed claim 1 in broadest embodiment thereof, and in the dependant claims in some particular embodiments.

A further object of the present invention is to provide an electric board as defined in the annexed claim 10.

The invention will be better understood from the following detailed description of an embodiment thereof, given by way of example, therefore non-limiting in any way, in relation to the accompanying drawings, in which:
- Fig. 1 shows an axonometric view of an electric board;
- Fig. 2 shows an axonometric view of a particularly preferred embodiment of an upright in accordance with the present invention;
- Fig. 3 shows in more detail an end portion of the upright in Fig. 2;
- Figs. 4a and 4b show an end portion of the upright of Fig. 2 in a first and a second operative configurations, respectively; and
- Fig. 5 shows an electric board comprising two uprights of the type represented in Fig. 2.

In the Figures, equal or similar elements are indicated with the same reference numerals.

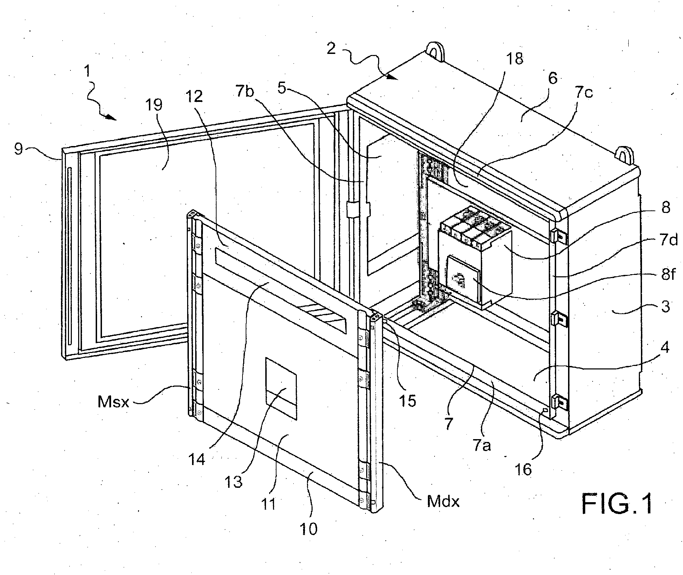

In Fig. 1 an electric board is represented, generally indicated with 1, including a box-shaped structure 2 comprising walls 3, 4, 5, 6, for example, made in galvanized metal sheet, which, together with a bottom wall 18 of the structure 2, define a board inner space which is provided in order to house one or more electrical equipment. In the particular example represented, an electrical equipment 8 is housed inside the board space 1, consisting in a so-called moulded-case circuit breaker. The electrical equipment 8 can be installed inside the board space 1 through mounting means which are generally known and not further analyzed in the present description.

The inner space of the board 1 is accessible through an essentially quadrangular opening 7 and defined by opening sides which are two-by-two opposite 7a, 7c and 7b, 7d, respectively. Preferably, the box-shaped structure 2 of the board 1 comprises two opposite crosspieces respectively arranged along the horizontal sides 7a, 7c of the opening 7. In the example of Fig. 1, only the crosspiece arranged along the side 7a is visible, which is preferably provided with two holes 15, 16, each arranged in the proximity of a respective crosspiece end portion.

In the example of Fig. 1, in a non-limiting way, the electric board 1 includes a front door 9 rotatably hinged to the box-shaped structure 2 of the electric board 1 and having a portion consisting in a crystal pane 19.

The electric board 1 comprises two opposite uprights Msx, Mdx for the securing of one or more panels 10, 11, 12 at the board opening 7. These panels can be, for example, blind panels 10, or panels 11, 12 provided with a respective window 13, 14. In the example represented in Fig. 1, the panel 11 is equipped with a window 13 adapted to receive a front portion 8f of the electrical equipment 8.

As it shall be noticed, in Fig. 1 the uprights Msx, Mdx and the panels 10, 11, 12 are shown removed from the box-shaped structure 2 of the electric board 1, even if the panels 10, 11, 12 are nevertheless secured to the uprights Msx and Mdx, for example through lock securing means as described in the Italian patent application n. RM 2003 A 000207, or through mechanical and electrically connecting securing means as described in the Italian patent application n. RM 2005 A 000202, or through equivalent securing modes.

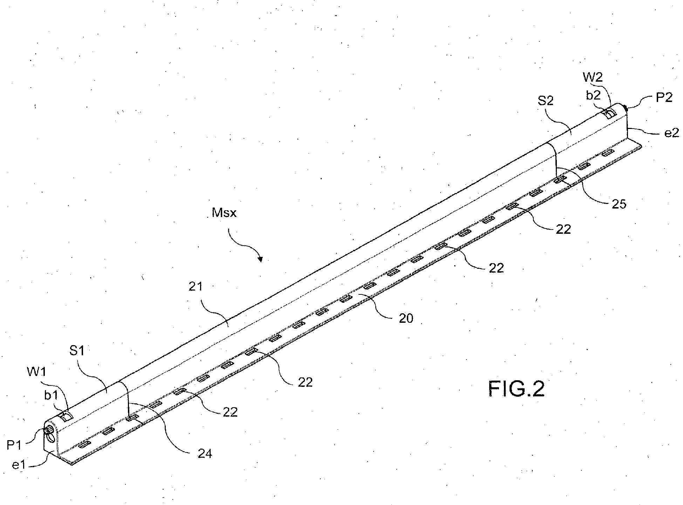

In Fig. 2 a particularly preferred embodiment of an upright in accordance with the present invention is represented, generally indicated with Msx. The upright Msx of Fig. 2 virtually corresponds to the upright intended to be coupled to the box-shaped structure 2 of the board 1 of Fig. 1 along the side 7b of the opening 7, that is, the so-called left upright. The other upright Msy of Fig. 1, or right upright, that is, the upright intended to be coupled to the box-shaped structure 2 of the board 1 along the side 7d of the opening 7, is to be considered essentially similar to the upright Msx which will be described with reference to Fig. 2, while underlining that the left upright Msx is specular to the right upright Mdx.

With reference to Fig. 2, the upright Msx includes a bar 21 having a securing band 20, preferably made in metal section bar. The securing band 20 is provided with securing means 22 adapted to allow the securing of at least one panel (for example, the panels 10, 11, 12 visible in Fig. 1) to the upright Msx. In the particularly preferred embodiment of Fig. 2, such securing means are implemented in a plurality of holes 22 essentially mutually aligned. In the example, the holes 22 are, in a non-limiting way, essentially rectangular. Alternatively, the holes 22 could have any different shapes, for example they could be circular, slotted, etc., holes.

The upright Msx further includes coupling means P1, P2 adapted to couple the upright to the box-shaped structure 2 of the electric board 1. According to the invention, the coupling means P1, P2 are removable coupling means and are selectively movable between a coupling operative position and a release operative position. The coupling means P1, P2 in the coupling operative position thereof allow rotatably coupling the upright Msx to the box-shaped structure 2 of the electric board 1, along a side 7b of the board space 1 entrance opening 7.

In a particularly preferred embodiment, the coupling means include at least a ratchet P1, P2 (or, in an equivalent manner, a retractile pin P1, P2) arranged essentially at an end portion e1, e2 of the upright Msx. More preferably, the upright Msx includes two opposite ratchets P1, P2, preferably independently movable one from the other, each of these being provided at a respective end portion e1, e2 of the upright Msx.

In the particular embodiment of Fig. 2, each of the ratchets P1, P2 includes a base portion b1, b2, preferably housed in a special housing seat S1, S2 provided in the bar 21 and accessible through a dedicated window W1, W2 provided in the housing seat S1, S2.

In a particularly advantageous embodiment, the upright Msx is divided in at least three upright portions which are separate and put in a side-by-side relationship one to the other, of which:
- a central portion having a higher linear extension;
- two opposite end portions e1, e2 (for example, delimitate by the lines 24 and 25 in Fig. 2) connected to the central portion and having a linear extension lower than this one, each end portion being provided with the coupling means P1, P2 adapted to couple the upright Mfx to the box-shaped structure 2 of the board 1.

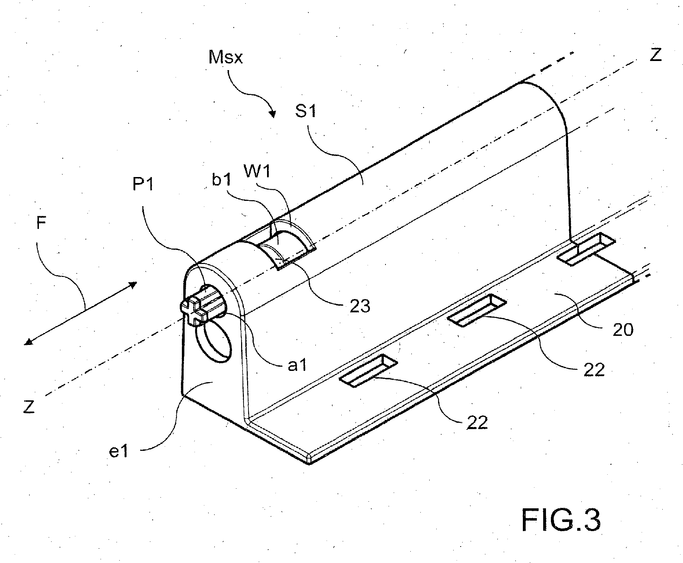

Fig. 3 shows an enlarged detail of the upright Msx and, in particular, the housing seat S1 and the ratchet P1 (in the example described, the ratchet P2 and the seat S2 can be considered completely similar and, for this reason, they will not be described in more detail).

With respect to the end portion e1 of the upright Msx, the ratchet P1 is movable, as indicated by the arrow F in Fig. 3, between an advanced operative position, represented in Fig. 3, and a backward operative position. Virtually, in the advanced operative position, the ratchet P1, upon passing through a special opening a1 of the seat S1, projects outwardly in relation to said opening a1 in order to engage with a respective hole 15 provided in the box-shaped structure 2 of the board 1. Therefore, in this operative position, the ratchet P1 is such as to be able to couple the upright Msx to the box-shaped structure 2 of the electric board 1.

On the contrary, in the backward operative position, the ratchet P1 is retracted, for example flush with the opening a1, therefore it is essentially non-interfering with the box-shaped structure 2 of the board 1.

When both the ratchets P1, P2 of the upright Msx are in their advanced operative position, interfering with respective opposite holes 15 provided in the box-shaped structure 2 of the electric board on two sides 7a, 7c opposite the opening 7, the upright Msx turns out to be rotatably hinged to the box-shaped structure 2 of the board 1, and it is prone to rotate around the axis Z-Z which passes through the ratchets P1, P2. Instead, when both the ratchets P1, P2 are in the backward position, the upright Msx can be removed from the box-shaped structure 2 of the board 1 (as represented in Fig. 1).

In a particularly preferred embodiment, the ratchets P1 and P2 are independently hold in the respective advanced and backward positions by snap-locking means, not shown in the Figures and within the seats S1 and S2, which make so that such two positions constitute two stable positions for the ratchets P1 and P2.

Preferably, the holes 15 of the board box-shaped structure 2 adapted to receive the ratchets P1, P2 in the drawn operative position, are drilled in two opposite crosspieces of the board 1 box-shaped structure 2 provided along two opposite sides 7a, 7c of the opening 7. Alternatively to the holes 15, equivalent coupling means adapted to rotatably engage with the ratchets P1, P2 can be provided in the board 11.

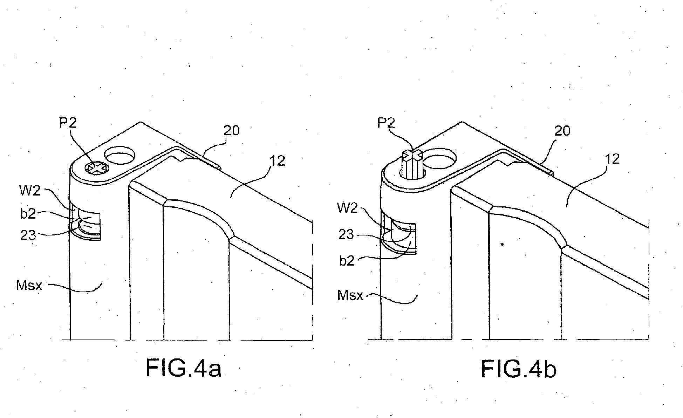

In the Figures 4a and 4b, the upright Msx of Fig. 2 is shown with the ratchet P2 respectively in the backward position and in the advanced position. As it shall be noticed in such Figures, in a particularly preferred embodiment, the base portion b2 of the ratchet P2 includes gripping means 23 accessible through the window W2 of the housing seat S2 in order to allow an operator to move the ratchet P2 between the backward position and the advanced position, and vice versa. In a particularly advantageous embodiment as concerns the handling convenience of the ratchet P2, the base portion b2 of the ratchet P2 includes a recess 23, inside which a tool end (for example, of a screwdriver) can be inserted in order to bring the ratchet P2 from the backward position (Fig. 4a) to the advanced position (Fig. 4b), and vice versa. Advantageously, as it is possible to notice in the Figs. 4a and 4b, the ratchet P2 can be moved by an operator independently or not from the presence of one or more panels 12 secured to the securing band 20 of the upright Msx.

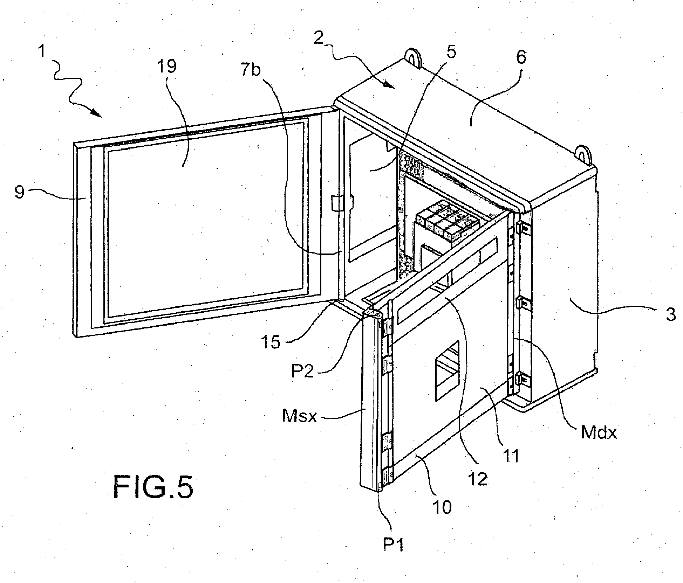

In Fig. 5, the electric board 1 of Fig. 1 is shown in an operative configuration in which the right upright Mdx is coupled through coupling means P1, P2 of the above-described type to the box-shaped structure 2 of the electric board 1. As it shall be noticed, in this case the assembly composed by two left and right uprights Msx, Mdx and by the panels 10, 11, 12 is rotatable around the rotational axis of the right upright Mdx. This means that the coupling means P1, P2 of the right upright Mdx are in the coupling position (ratchets P1, P2 in the advanced position), while the coupling means of the other upright Msx are in the release position (ratchets P1, P2 in the backward position).

Starting from the configuration of Fig. 5, and by putting the upright left Msx beside the side 7b of the opening 7, by means of a rotation around the axis of the right upright Mdx, and, once such position has been reached, by actuating the coupling means P1, P2 of the left upright Msx, a second operative configuration of the board is obtained in which the opening 7 is essentially occluded by the assembly composed by the panels 10, 11, and 12 and the uprights Msx, Mdx.

Starting from the second above-described operative configuration, a third operative configuration is obtained by releasing the coupling means P1, P2 of the right upright Mdx and rotating the assembly (panels 10, 11, 12 and right and left uprights) around the left upright Msx axis. A further operative configuration is that represented and described with reference to Fig. 1, wherein both the uprights Msx and Msy (all the coupling means P1, P2 in the release position) can be removed, together with the panels 10, 11, 12 installed thereto, from the board structure.

As it can be easily inferred from what has been set forth above, the objects of the invention are fully met, since, thanks to the provision of uprights as described above, the access to the board space in the assembling or maintenance operations is made particularly easy and quick, also in the presence of a number of panels associates to the board.

Of course, those of ordinary skill in the art, to the aim of meeting specific, contingent needs, will be able to make a number of modifications and variations to an upright and a board described above, all of which are anyhow within the protection scope of the invention, as defined by the annexed claims.

## Claims

1. An upright (Msx, Mdx) for electric board (1), the board including a box-shaped structure (2) comprising board walls (3,4,5,6,18) defining an inner space accessible through an opening (7) of said structure (2), the upright (Msx, Mdx) including:
- a bar (21) provided with a securing band (20) having securing means (22) adapted to allow the securing of at least one panel (10, 11, 12) to the board at such opening (7), and
- removable coupling means (P1, P2), for securing the upright to the box-shaped structure of the board (1) along a side of such opening (7), which are movable between a coupling position and a release position, said coupling means (P1, P2) in the coupling position being such as to rotatably couple the upright (Msx, Mdx) to the structure (2), said coupling means including at least one ratchet (P1, P2) arranged in the proximity of an end portion (e1, e2) of the upright (Msx, Mdx), the ratchet (P1, P2) being movable in relation to such end portion (e1, e2) between an advanced operative position, or coupling position, and a backward operative position, or release position;
wherein the bar (21) at an end portion (e1, e2) thereof comprises at least one housing seat (S1, S2) housing therein said ratchet (P1, P2), the housing seat having an opening (a1, a2) adapted to be passed through by an end portion of said ratchet when the latter is in the advanced position, the ratchet (P1, P2) including a base portion (b1, b2) connected to said ratchet end portion,
**characterized in that**
the housing seat (S1, S2) includes a window (W1, W2) through which the base portion (b1, b2) is accessible in both the positions of said ratchet for bringing said ratchet from one to the other of said positions and vice versa.

2. The upright (Msx, Mdx) according to any preceding claim, wherein the coupling means (P1, P2) are such as to be able to be moved, independently or not from the presence of said at least one panel (10, 11, 12) secured to the securing band (20).

3. The upright (Msx, Mdx) according to claim 1, further including snap-locking means, in order to lock the at least one ratchet (P1, P2) in the advanced operative position and the backward operative position, respectively.

4. The upright (Msx, Mdx) according to claim 1, wherein the at least one ratchet includes a first (P1) and a second (P2) ratchets, said ratchets being arranged at upright opposite end portion (e1, e2), the upright (Msx, Mdx) in the coupling position being rotatable around a rotational axis (Z-Z) passing through such ratchets.

5. The upright (Msx, Mdx) according to claim 4, wherein the ratchets (P1, P2) are movable independently one from the other.

6. The upright (Msx, Mdx) according to claims 4 or 5, wherein the ratchets (P1, P2) in the advanced operative position can be received in respective holes (15, 16) provided in the box-shaped structure (2) on sides opposite in relation to said opening (7).

7. The upright (Msx, Mdx) according to claim 6, wherein the holes (15, 16) are respectively provided on two opposite crosspieces of said structure (2) adjacent to such opening (7).

8. The upright (Msx, Mdx) according to claim 1, wherein the base portion (b1, b2) includes gripping means (23) for the handling of the ratchet, said gripping means being accessible through said window (W1, W2) in both the operative positions of the ratchet (P1, P2).

9. The upright (Msx, Mdx) according to claim 8, wherein said gripping means include a recess (23)inside which a tool end can be inserted in order to bring the ratchet from one of said positions to the other of said positions and vice versa.

10. An electric board (1) including a box-shaped structure (2) comprising board walls (3, 4, 5, 6) defining an inner space accessible through an opening (7) of said structure (2), **characterized by** the fact of comprising at least one upright (Msx, Mdx) according to any one of the preceding claims.

11. The electric board (1) according to claim 10, wherein the at least one upright comprises two uprights (Msx, Mdx) being able to be removably coupled to said board (1) along two opposite sides of said opening (7).

## Patentansprüche

1. Ein Ständer (Msx, Mdx) für eine elektrische Platine (1), wobei die Platine eine kastenförmige Struktur (2) umfasst, die Platinenwände (3, 4, 5, 6, 18) aufweist, die einen inneren Raum definieren, der durch eine Öffnung (7) der Struktur (2) zugänglich ist, wobei der Ständer (Msx, Mdx) folgende Merkmale umfasst:
eine Stange (21), die mit einem Sicherungsband (20) versehen ist mit einer Sicherungseinheit (22), die angepasst ist, um das Sichern von zumindest einer Tafel (10, 11, 12) an der Platine an solch einer Öffnung (7) zu ermöglichen, und
entfernbare Kopplungseinrichtungen (P1, P2) zum Sichern des Ständers an der kastenförmigen Struktur der Platine (1) entlang einer Seite einer solchen Öffnung (7), die bewegbar sind zwischen einer Kopplungsposition und einer Freigabeposition, wobei die Kopplungseinrichtungen (P1, P2) in der Kopplungsposition derart sind, um den Ständer (Msx, Mdx) drehbar mit der Struktur (2) zu koppeln, wobei die Kopplungseinrichtungen zumindest einen Sperrhaken (P1, P2) umfassen, der in der Nähe eines Endabschnitts (e1, e2) des Ständers (Msx, Mdx) angeordnet ist, wobei der Sperrhaken (P1, P2) in Bezug auf einen solchen Endabschnitt (e1, e2) bewegbar ist zwischen einer vorgeschobenen Betriebsposition oder Kopplungsposition und einer zurückgezogenen Betriebsposition oder Freigabeposition;
wobei die Stange (21) an einem Endabschnitt (e1, e2) derselben zumindest einen Gehäusesitz (S1, S2) aufweist, in dem der Sperrhaken (P1, P2) untergebracht ist, wobei der Gehäusesitz eine Öffnung (a1, a2) aufweist, die angepasst ist, damit durch dieselbe ein Endabschnitt des Sperrhakens verläuft, wenn der letztere in der vorgeschobenen Position ist, wobei der Sperrhaken (P1, P2) einen Basisabschnitt (b1, b2) umfasst, der mit dem Sperrhakenendabschnitt verbunden ist,
**dadurch gekennzeichnet, dass**
der Gehäusesitz (S1, S2) ein Fenster (W1, W2) umfasst, durch das der Basisabschnitt (b1, b2) in beiden Positionen des Sperrhakens zugänglich ist, um den Sperrhaken von einer zu der anderen der Positionen zu bringen und umgekehrt.

2. Der Ständer (Msx, Mdx) gemäß einem der vorhergehenden Ansprüche, bei dem die Kopplungseinrichtungen (P1, P2) derart sind, um bewegt werden zu können, unabhängig oder nicht von dem Vorliegen der zumindest einen Tafel (10, 11, 12), die an dem Sicherungsband (20) gesichert ist.

3. Der Ständer (Msx, Mdx) gemäß Anspruch 1, der ferner eine Schnappverriegelungseinrichtung umfasst, um den zumindest einen Sperrhaken (P1, P2) in der vorgeschobenen Betriebsposition beziehungsweise der zurückgezogenen Betriebsposition zu verriegeln.

4. Der Ständer (Msx, Mdx) gemäß Anspruch 1, bei dem der zumindest eine Sperrhaken einen ersten (P1) und einen zweiten (P2) Sperrhaken umfasst, wobei die Sperrhaken an gegenüberliegenden Ständerendabschnitten (e1, e2) angeordnet sind, wobei der Ständer (Msx, Mdx) in der Kopplungsposition um eine Drehachse (Z-Z) drehbar ist, die durch solche Sperrhaken verläuft.

5. Der Ständer (Msx, Mdx) gemäß Anspruch 4, bei dem die Sperrhaken (P1, P2) unabhängig voneinander bewegbar sind.

6. Der Ständer (Msx, Mdx) gemäß Anspruch 4 oder 5, bei dem die Sperrhaken (P1, P2) in der vorgeschobenen Betriebsposition in jeweiligen Löchern (15, 16) aufgenommen werden können, die in der kastenförmigen Struktur (2) auf Seiten vorgesehen sind, die in Bezug auf die Öffnung (7) gegenüberliegen.

7. Der Ständer (Msx, Mdx) gemäß Anspruch 6, bei dem die Löcher (15, 16) jeweils auf zwei gegenüberliegenden Querstücken der Struktur (2) benachbart zu einer solchen Öffnung (7) vorgesehen sind.

8. Der Ständer (Msx, Mdx) gemäß Anspruch 1, bei dem der Basisabschnitt (b1, b2) eine Greifeinrichtung (23) für die Handhabung des Sperrhakens umfasst, wobei die Greifeinrichtung in beiden Betriebspositionen des Sperrhakens (P1, P2) durch das Fenster (W1, W2) zugreifbar ist.

9. Der Ständer (Msx, Mdx) gemäß Anspruch 8, bei dem die Greifeinrichtung eine Ausnehmung (23) umfasst, in die ein Werkzeugende eingefügt werden kann, um den Sperrhaken von einer der Positionen zu der anderen der Positionen zu bringen und umgekehrt.

10. Eine elektrische Platine (1), die eine kastenartige Struktur (2) umfasst, die Platinenwände (3, 4, 5, 6) aufweist, die einen Innenraum definieren, der durch eine Öffnung (7) der Struktur (2) zugänglich ist, **gekennzeichnet durch** die Tatsache, dass dieselbe zumindest einen Ständer (Msx, Mdx) gemäß einem der vorhergehenden Ansprüche aufweist.

11. Die elektrische Platine (1) gemäß Anspruch 10, bei der der zumindest eine Ständer zwei Ständer (Msx, Mdx) aufweist, die entlang zwei gegenüberliegenden Seiten der Öffnung (7) entfernbar mit der Platine (1) gekoppelt werden können.

## Revendications

1. Montant (Msx, Mdx) pour tableau électrique (1), le tableau comprenant une structure en forme de boîte (2) comprenant des parois de tableau (3, 4, 5, 6, 18) définissant un espace intérieur accessible à travers une ouverture (7) de ladite structure (2), le montant (Msx, Mdx) comprenant :
- une barre (21) pourvue d'une bande de fixation (20) comportant un moyen de fixation (22) adapté pour permettre la fixation d'au moins un panneau (10, 11, 12) sur le tableau au niveau de ladite ouverture (7), et
- un moyen d'accouplement amovible (P1, P2) pour fixer le montant sur la structure en forme de boîte du tableau (1) le long d'un côté de cette ouverture (7), qui est mobile entre une position d'accouplement et une position de débrayage, ledit moyen d'accouplement (P1, P2) dans la position d'accouplement étant prévu pour accoupler à rotation le montant (Msx, Mdx) à la structure (2), ledit moyen d'accouplement comprenant au moins un rochet (P1, P2) placé à proximité d'une partie d'extrémité (e1, e2) du montant (Msx, Mdx), le rochet (P1, P2) étant mobile relativement à cette partie d'extrémité (e1, e2) entre une position fonctionnelle avancée, ou position d'accouplement, et une position fonctionnelle arrière, ou position de débrayage ;
dans lequel la barre (21) comprend, en une partie d'extrémité (e1, e2) de celle-ci, au moins un siège de logement (S1, S2) dans lequel est logé ledit rochet (P1, P2), le siège de logement comportant une ouverture (a1, a2) adaptée pour être traversée par une partie d'extrémité dudit rochet quand ce dernier est dans la position avancée, le rochet (P1, P2) comprenant une partie de base (b1, b2) connectée à ladite partie d'extrémité de rochet,
**caractérisé en ce que** le siège de logement (S1, S2) comporte une fenêtre (W1, W2) à travers laquelle la partie de base (b1, b2) est accessible dans les deux positions dudit rochet pour amener ledit rochet de l'une à l'autre desdites positions et vice versa.

2. Montant (Msx, Mdx) selon l'une quelconque des revendications précédentes, dans lequel le moyen d'accouplement (P1, P2) est prévu pour être apte à être déplacé, indépendamment ou non de la présence dudit au moins un panneau (10, 11, 12) fixé à la bande de fixation (20).

3. Montant (Msx, Mdx) selon la revendication 1, comprenant en outre un moyen de blocage par pression, afin de bloquer ledit au moins un rochet (P1, P2) respectivement dans la position fonctionnelle avancée et dans la position fonctionnelle arrière.

4. Montant (Msx, Mdx) selon la revendication 1, dans lequel ledit au moins un rochet comprend un premier (P1) et un deuxième (P2) rochet, lesdits rochets étant placés en des parties d'extrémité opposées du montant (e1, e2), le montant (Msx, Mdx) dans la position d'accouplement étant apte à tourner autour d'un axe de rotation (Z-Z) passant par ces rochets.

5. Montant (Msx, Mdx) selon la revendication 4, dans lequel les rochets (P1, P2) sont mobiles indépendamment l'un de l'autre.

6. Montant (Msx, Mdx) selon la revendication 4 ou 5, dans lequel les rochets (P1, P2) dans la position fonctionnelle avancée peuvent être reçus dans des trous respectifs (15, 16) prévus dans la structure en forme de boîte (2) sur des côtés opposés, par rapport à ladite ouverture (7).

7. Montant (Msx, Mdx) selon la revendication 6, dans lequel les trous (15, 16) sont placés respectivement sur deux pièces transversales opposées de ladite structure (2) adjacentes à ladite ouverture (7).

8. Montant (Msx, Mdx) selon la revendication 1, dans lequel la partie de base (b1, b2) comprend un moyen de préhension (23) pour la manipulation du rochet, ledit moyen de préhension étant accessible à travers ladite fenêtre (W1, W2) dans les deux positions fonctionnelles du rochet (P1, P2).

9. Montant (Msx, Mdx) selon la revendication 8, dans lequel ledit moyen de préhension comprend un évidement (23) à l'intérieur duquel une extrémité d'outil peut être insérée afin d'amener le rochet de l'une desdites positions à l'autre, et vice versa.

10. Tableau électrique (1) comprenant une structure en forme de boîte (2) comprenant des parois de tableau (3, 4, 5, 6) définissant un espace intérieur accessible à travers une ouverture (7) de ladite structure (2), **caractérisé en ce qu'**il comprend au moins un montant (Msx, Mdx) selon l'une quelconque des revendications précédentes.

11. Tableau électrique (1) selon la revendication 10, dans lequel ledit au moins un montant comprend deux montants (Msx, Mdx) aptes à être accouplés de façon amovible audit tableau (1) le long de deux côtés opposés de ladite ouverture (7).
